# EUROPEAN PATENT APPLICATION

(11) **EP 4 530 108 A1**
(43) Date of publication of application: **02.04.2025**
(21) Application number: 24203026.0
(22) Date of filing: 26.09.2024
(51) Int. Cl.: B60K 11/08, B60R 19/48, B62D 25/10

(54) **AGRICULTURAL VEHICLE COMPRISING ENGINE BONNET WITH AERATION GRILLES**

(30) Priority: 29.09.2023 IT 202300020118
(71) Applicant: CNH Industrial Italia S.p.A., 10156 Torino (IT)
(72) Inventor: Condurat, Constantin Dragos, 10156 Turin (IT); ., Yogesh, 10156 Turin (IT)
(74) Representative: CNH Industrial IP Department

(57) **Abstract**

Agricultural vehicle comprising bonnet (HD) with aeration grilles (G), the bonnet having a substantially elongated shape according to a development axis (x) with a front portion (FO) provided with inlet openings and a top portion (TP) provided with outlet openings (OP), wherein the outlet openings have aeration grilles (G) and immediately under the aeration grilles are arranged louvers (L) arranged to speed up and orient an outgoing air flow.

## Description

### Field of the invention

The present invention relates to an agricultural vehicle comprising a bonnet with aeration grilles.

### Description of the prior art

Thermal management of an agricultural vehicle have a crucial role in the performances and durability of the vehicle itself.

Agricultural vehicles are often implemented in extreme conditions, and in particular in dusty places.

Usually, the combustion engine is arranged in the front portion of the vehicle, and a bonnet is arranged to cover the engine. Usually, inlet and outlet air openings are arranged in the bonnet in order to cool down the engine components.

Usually, the inlet openings are arranged in the front/upper portion of the bonnet, while the outlet opening are arranged laterally, such that to avoid the deposition of dust and debris, that would obstruct the outlet openings.

In addition, grills are applied to the inlet and outlet openings in order to avoid the introduction of branches and grass that would obstruct the free air circulation.

Usually, the air flow is directed through a radiator, hidden by the bonnet.

The amount of air flow has a significant role on engine cooling efficiency and engine performance.

To improve the outlet air flow, the number of openings can vary and the opening themselves can be moved, however, the top portion of the bonnet is usually avoided due to the ease with which the holes in the grills get clogged.

In addition, outlet openings arranged in top portion of the bonnet would permit dry grass to contact the upper portion of the engine with a serious fire risk.

In contrast, opening arranged on lateral walls of the bonnet are almost vertical and do not permit, naturally, the dry grass to enter the engine compartment. However, the flow circulation is not maximized.

Unless specifically excluded in the detailed description that follows, what is described in this chapter is to be considered as an integral part of the detailed description.

### Summary of the invention

Therefore, the main object of the present invention is to provide for a solution which permits the implementation of efficient outlet openings, where efficient means that are suitable to permit a good air flow and remain substantially clean.

The main principle of the invention is the implementation of outlet openings arranged in the top portion of the bonnet and the openings are closed by means of grilles and louvers arranged together in a sandwich configuration.

The grill prevents debris to enter the engine compartment. The louvers, arranged immediately under the grills, develop a flow of warm air that moves from bottom to top keeping the grills clear.

In addition, the warm air, ejected upwards with a higher speed is easily dispersed without impacting the windscreen of the vehicle cabin.

In addition, the louvers prevent the view of the internal parts of the engine compartment achieving also an aesthetic result.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a perspective view of an example of bonnet according to the present invention;
- Fig. 2 discloses a lateral exploded view of the top portion of the bonnet of Fig.1;
- Fig. 3 discloses a transversal section of the top portion of the bonnet according to Fig. 2;
- Fig. 4 discloses a rear view of the transversal section of the top portion of the bonnet with the grills and louvers in operation conditions.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

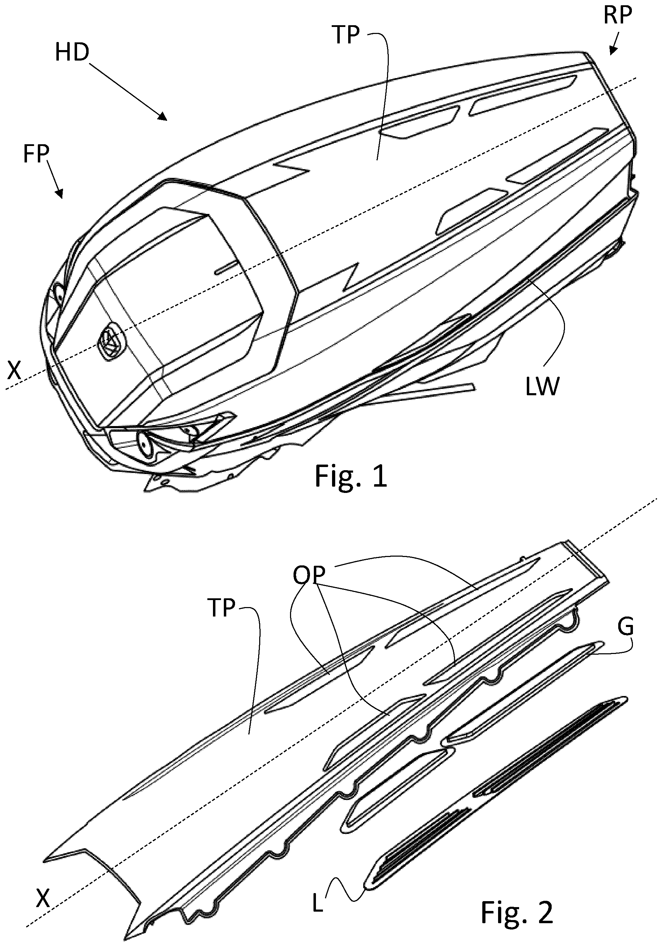

Fig. 1 shows a perspective top view of an example of bonnet HD according to the present invention.

The bonnet includes a front portion FP, a top portion TP and a rear portion RP.

According to the example outlet openings OP are arranged in the top portion of the bonnet and preferably close to the rear portion of the bonnet.

The bonnet has a generally elongated shape according to the development axis X of the vehicle.

The outlet opening OP are preferably arranged adjacent to the lateral walls LW of the bonnet and have themselves an elongated shape.

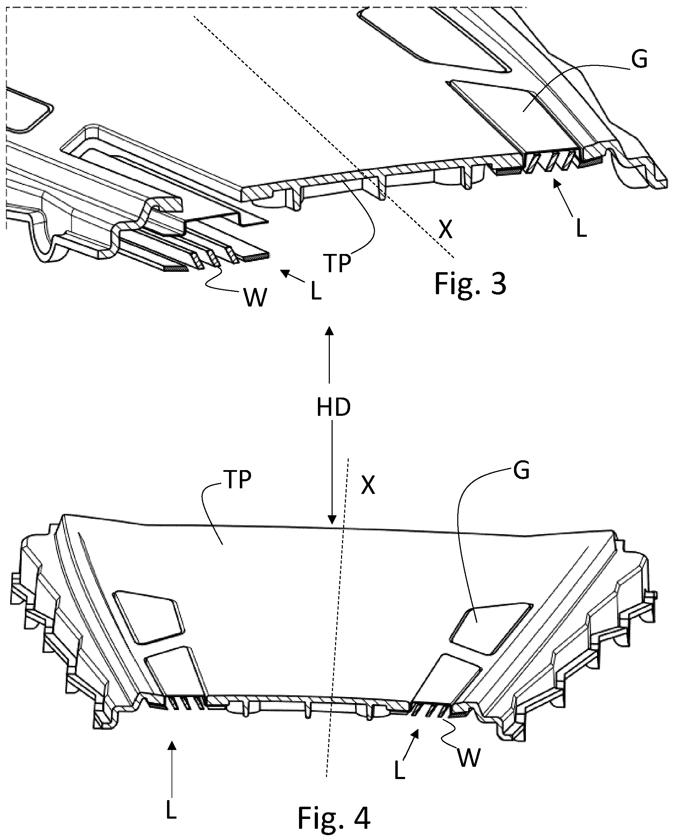

Each of the outlet opening OP is closed by a set comprising a grill G and louvers L, such that in operating conditions, see Fig. 4, the louvers L are immediately under the grill. The grill has passing through holes, the holes can be circular or hexagonal, and so on.

The louvers L are formed by a plurality of wings W. Preferably, the development axis of the wings is parallel with the development axis of the bonnet or equivalently parallel to the adjacent lateral walls LW.

In addition, the wings are tilted outward. Advantageously, even if the hot air exits from the top portion of the bonnet, the air flows are oriented outwardly. In other words, considering a couple of outlet openings arranged at the same distance from the windscreen, the corresponding flows are reciprocally diverging. This is particularly advantageous because the Morgana effect is strongly reduced and the operator, driving the vehicle, has a clearer view of the environment.

The louvers develop the function to accelerate the air flow at the grill in order to avoid the depositions of debris and to direct the air flow outward in order to avoid that the hot air impacts the cabin windscreen.

Preferably, for each side of top portion of the bonnet, two or more outlet openings OP are arranged. Preferably, each opening has an elongated shape and the two or more openings are aligned parallel to the development axis X of the bonnet/vehicle.

According to a preferred variant of the invention, the louvers L of two or more outlet openings are made, together, in on single component such that it defines also a structural function reinforcing the top portion TP of the bonnet. As disclosed in figure 2, the grilles G of two outlet openings are separated, while the louvers L of both the outlet openings are made in one single component.

In other words, the louvers of both the openings share the same frame.

Advantageously the positioning of the outlet opening in the top portion of the bonnet enhances the chimney effect, such that the fresh air induced to enter in the space between the bonnet from the front portion of the bonnet, finds the better path to exit.

Variants of the non-limiting examples described are possible, without however departing from the scope of protection of the present invention, including all equivalent embodiments for a person skilled in the art, to the content of the claims.

From the description given above, the person skilled in the art is capable of realizing the object of the invention without introducing further constructive details.

## Claims

1. Agricultural vehicle comprising bonnet (HD) with aeration grilles (G), the bonnet having a substantially elongated shape according to a development axis (x) with a front portion (FO) provided with inlet openings and a top portion (TP) provided with outlet openings (OP), wherein the outlet openings have aeration grilles (G) and immediately under the aeration grilles are arranged louvers (L) arranged to speed up and orient an outgoing air flow.

2. Vehicle according to claim 1, wherein the outlet openings have an elongated shape, parallel to said development axis (X) .

3. Vehicle according to claim 1 or 2, wherein said outlet openings are symmetrically arranged with respect to said development axis.

4. Vehicle according to any one of the previous claims, wherein the lovers of each outlet opening includes a set of wings (W) arranged to orient the exiting air outwardly.

5. Vehicle according to any one of the previous claims wherein the aeration grilles are provided with a plurality of passing-through holes.

6. Vehicle according to any one of the previous claims, wherein the louvers of two or more outlet openings share a common frame.

7. Vehicle according to any one of the previous claims, wherein the aeration grilles and the louvers are packed in sandwich fashion.

8. Vehicle according to any one of the previous claims, wherein the outlet openings have an elongated shape, parallel to said development axis (X) and arranged adjacent to lateral and circa vertical walls (LW) of the bonnet.
